# DEMANDE DE BREVET EUROPEEN

(11) **EP 1 120 960 A2**
(43) Date de publication de la demande: **01.08.2001**
(21) Numéro de dépôt: 01400206.7
(22) Date de dépôt: 25.01.2001
(51) Int. Cl.: H04N 5/00, H04N 7/24

(54) **Décodeur de télévision et procédé de décodage de signaux d'un flux**

(30) Priorité: 25.01.2000 FR 0001077
(71) Demandeur: SAGEM SA, 75116 Paris (FR)
(72) Inventeur: Torche, Fabien, 95800 Cergy Saint Christophe (FR)
(74) Mandataire: Schmit, Christian Norbert Marie

(57) **Abrégé**

Pour résoudre un problème d'utilisation d'un décodeur (1) de télévision numérique par un utilisateur ordinaire, on prévoit de munir ce décodeur d'une mémoire (13) de correspondance. Dans cette mémoire de correspondance on fait correspondre à des triplets (dvb) de signaux (3) diffusés selon la norme DVB des informations logiques (LOGO) bien plus facilement compréhensibles par l'utilisateur. Ces informations plus compréhensibles sont de préférence le nom commercial d'un service, un logo représentant ce service, voire un numéro logique attribué dans une séquence de service. Ces informations plus compréhensibles sont visualisées sur un dispositif (9) d'affichage relié à ce décodeur.

## Description

La présente invention a pour objet un décodeur de télévision et un procédé de décodage de signaux d'un flux, en vue de permettre le réglage de la réception choisie de plusieurs services dans ce décodeur de télévision. Elle vise à simplifier l'identification des services télévisés. L'invention est plus particulièrement destinée à la télévision dite numérique, que des signaux pour celle-ci soient transmis par un câble (dans des bandes de fréquence de 170 à 862 MHz), par un satellite (dans des bandes de fréquence de 10,3 à 12,8 GHz), ou par voie terrestre (dans des bandes de 17 à 862 MHz). Le but de l'invention est de simplifier l'utilisation d'un décodeur par un utilisateur final, sans compétence particulière.

Typiquement un récepteur de télévision numérique comporte un décodeur relié par ailleurs à un dispositif de visualisation. Le décodeur comporte des moyens de réception pour recevoir les signaux émis dans un flux et des moyens de formatage pour transformer les signaux reçus en des signaux applicables directement sur les organes de commande du dispositif de visualisation. Pour un tube cathodique, il s'agit par exemple des commandes appliquées sur les organes de balayage et sur les différents canons à électrons produisant des pixels de couleur sur l'écran.

Le formatage se réalise en respectant pour chacune des images à représenter des tables de paramètres. On distingue les tables dites SI, System Information - Information Système - qui dans la norme DVB, peuvent représenter un titre d'un programme diffusé, une heure de début, une heure de fin, ainsi que d'autres caractéristiques. Le contenu des tables SI intéresse particulièrement l'utilisateur car elles conduisent à afficher des informations qui permettent à l'utilisateur de choisir le programme qu'il veut visualiser. D'autres tables dites PSI, Program Specific Information - Information Spécifique de Programme, décrites dans la norme MPEG sont des tables fonctionnelles d'identification de paquets vidéo audio ou de données. Elles représentent en définitive le protocole de transmission et l'architecture des paquets numériques transmis ainsi que leur signification. Les tables PSI servent à afficher les images d'un programme visualisé.

Dans la télévision numérique, il est prévu que les signaux de paramètres soient transmis dans le flux (c'est à dire avec le signal vidéo lui-même) dans des paquets de données. Les paquets de données transmis sont arrangés en sections, les sections comportant classiquement 1024 octets et dans certains cas 4096 octets. Les paquets d'une même table ne sont pas nécessairement groupés dans une même section. Ils peuvent être répartis dans des sections successives, entrelacées avec des paquets d'informations relatifs à d'autres tables ou au signal vidéo, au signal audio ou à un signal de données. Dans chaque section, des identifiants permettent d'attribuer les paquets de données à des tables particulières parmi d'autres. En réception, un décodeur ne sait pas à priori comment sont répartis les paquets de données, mais il connaît le découpage des sections. Le décodeur doit donc lire l'identifiant dans chaque section et réorganiser les données pour les affecter aux bonnes tables. Toutes les tables sont éditées par les opérateurs de télévision ou les gestionnaires de média de transport, sont incorporées dans le flux de cet opérateur, et sont acheminées vers les utilisateurs par les différents médias.

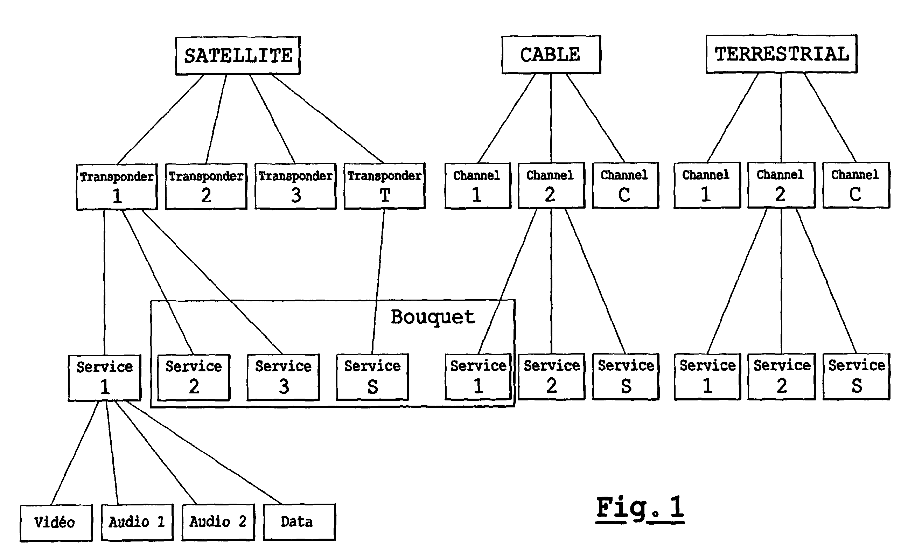

La figure 1 montre une représentation des différents médias de transmission. Elle permet par ailleurs de figer le vocabulaire utilisé dans le domaine. Des moyens d'émission réception comportant des satellites, des câbles ou des dispositifs de rediffusion terrestre constituent des réseaux de transmission. Pour chaque média de transmission, il existe une table NIT, Network Information Table - Table d'Information de Réseau, qui indique le nom du réseau, le numéro du réseau, et pour chacun des multiplexes du réseau, des transpondeurs quand il s'agit de liaison par satellite, des informations telles que fréquence de modulation, position orbitale de bits, polarisation etc..... Des informations comparables sont contenues dans les tables NIT des médias de transmission câble ou terrestre.

Les informations contenues dans les tables NIT sont des paramètres physiques permettant essentiellement à un décodeur de se caler en fréquence pour capter chaque multiplex. Chaque table NIT comporte, pour un transpondeur désigné, une liste de services véhiculés par le transpondeur. Cette liste est normalement limitée, quelquefois à 8 services, du fait de la limitation de bande passante réservée pour un transpondeur. Par service on entend classiquement ce que les utilisateurs appellent une chaîne de télévision, par exemple une chaîne diffusant au cours de la journée des programmes successifs les uns aux autres. Néanmoins les services peuvent être des services uniquement audio ou des services de données ou autres, notamment interactifs.

Chaque service est ainsi identifié dans la table NIT par un triplet comportant une information dite Original Network Id ― Identification de réseau origine, ontwk_id. Un service est encore identifié par une information Transport Stream Id ― Identification du multiplex, ts_id, typiquement cette information désigne un des transpondeurs en relation avec le satellite. Enfin le service va être identifié par une information dite Service Id ― Identification de Service, svc_id, qui sera en pratique un numéro attribué, par un opérateur qui gère le satellite, à la transmission de ce service. Dans le message correspondant à la table NIT le décodeur récupère essentiellement le triplet ontwk_id, ts_id, svc_id selon la norme DVB ainsi que les paramètres physiques (PSI) du transpondeur.

Chaque transpondeur émet une table SDT qui comporte des sous-tables. Chaque sous-table décrit chacun des services qui sont véhiculés par le transpondeur. Ces services peuvent faire partie des services distribués par un transpondeur ou par un autre transpondeur. Ceci est identifié à partir de la table NIT.

En définitive toute une architecture de tables est ainsi distribuée, en particulier selon la norme EN 300 468 V1.3.1, et le but du décodeur est de reconstruire toutes les tables pour disposer des informations de réglage ainsi que des informations à montrer en visualisation pour les utilisateurs.

En ce qui concerne les transpondeurs, chacun diffuse en outre une table dite PAT, Program Association Table - Table des programmes associés, table qui elle-même donne la liste de tables PMT, Program Map Table - Table des composants des programmes, qui sont associées à chacun des services.

Au niveau des services, on trouvera des tables dites EIT, Event Information Table - Table d'événements, et des tables PMT. Les tables EIT se réfèrent à chaque service, à partir de son triplet d'identification selon la norme DVB, et indiquent pour ce service l'heure de début, la durée ou l'heure de fin, le statut, ainsi que d'autres informations relatives à un programme diffusé. Les tables EIT sont par ailleurs dédoublées en ElTp et ElTf pour représenter une table correspondant à l'instant présent (p), et ainsi qu'une autre table correspondant à un instant suivant (f, following). Les deux tables ElTp et ElTf sont de même structure mais possèdent chacune un identifiant renseignant sur leur qualité.

En pratique, dans le flux des sections de paquets, les tables NIT, SDT et EIT se suivent dans le temps selon les normes. Elles possèdent des identifiants dans le flux égaux respectivement à 0x0010, 0x0011, et 0x0012. Elles sont complétés par l'information ts_id.

La norme MPEG2 permet de multiplexer plusieurs programmes dans un même Transport Stream (TS) ou canal. Cette norme est complétée par la norme DVB qui permet la constitution et le zapping sur plusieurs transpondeurs au sein d'un même et unique réseau. Les programmes sont repérés par le triplet (ontwk_id, ts_id, et svc_id). Chaque opérateur diffuse donc une signalisation plus ou moins complète permettant la constitution d'une liste de services accessibles à partir d'une connexion unique sur un transpondeur. Dans ce cadre, les paramètres de connexion sont soit saisis par l'utilisateur, à l'écran, soit figés dans le décodeur.

Afin de permettre à un utilisateur de récupérer une liste complète de tous les services diffusés sur tous les réseaux et quels que soient les opérateurs, un balayage appelé aussi scanning ou d'autres procédés ont été mis en place. Ils se traduisent par une succession de visites de transpondeurs permettant de récupérer des services de plusieurs réseaux, et non plus par une installation unique. Le principe du balayage est le suivant. On analyse une plage de fréquence avec les différents paramètres associés (débit, symbole etc....) pour trouver tous les pics de fréquence accessibles. Sur chacun des pics on récupère la liste de services diffusés par les opérateurs. On analyse ensuite les tables SI sensées décrire une liste de services à l'aide des descripteurs selon la norme DVB. On analyse ensuite les tables PSI qui permettent d'élaborer des listes de services sans que l'opérateur ait besoin de les décrire dans les tables SI.

Cette installation aboutit à une liste de services que l'utilisateur peut visualiser sur son dispositif de visualisation, et sélectionner, par exemple pour en former une nomenclature de service préféré, ou pour les visualiser immédiatement. Malheureusement les triplets affichés, ontwk_id, ts_id, et svc_id sont peu significatifs et compliqués pour un utilisateur ordinaire. Dans ces conditions, soit, un manuel est fourni à cet utilisateur ordinaire pour lui permettre de s'y reconnaître, soit cet utilisateur doit faire appel à un professionnel, soit enfin il doit pour se simplifier les réglages adopter un bouquet de services dont des caractéristiques préréglées pourront lui être fournie par ailleurs. Le but de l'invention est notamment de ce point de vue de permettre à un utilisateur ordinaire, sans connaissance particulière, soit d'accéder directement à un service identifié aisément soit de composer une nomenclature préférée de services, en pratique de faire correspondre à des boutons identifiés de sa télécommande (en général numérotés) des choix de services personnalisés.

Afin d'éviter à l'utilisateur de saisir les triplets DVB dont il ne maîtrise pas la signification, l'invention prévoit de mettre à disposition de l'utilisateur un moyen plus simple d'identification d'un service. Ce moyen plus simple revient à faire correspondre à un service un mécanisme simple et compréhensible d'identification. Ce mécanisme permet alors non seulement de reconnaître un service, mais encore de zapper dessus. Selon l'invention, ce moyen simple comporte la création d'une table de correspondance entre les triplets ontwk_id, ts_id, svc_id incompréhensibles et un élément logique reconnaissable. Dans un exemple particulier, cet élément logique reconnaissable est un nom de service qui en clair, pour un utilisateur commun, identifie mieux le service. Ce nom sera en principe un nom commercial véhiculé par la société gestionnaire du service pour se faire connaître de ses téléspectateurs ou auditeurs. Autrement cet élément logique sera un logo que la chaîne de télévision ou de radio diffusion aura pris soin de diffuser dans le public et par laquelle elle peut se faire reconnaître. Eventuellement par logo on comprendra une phrase musicale identifiant un service. Enfin, l'élément logique pourra être un numéro, ce numéro étant un numéro distribué par le fournisseur de service lui-même pour être incorporé dans des champs libres des tables transmises dans le flux. De préférence, les trois élément logiques ci-dessus seront présentés ensemble aux téléspectateurs, dans un menu, en correspondance de triplets DVB (eux-mêmes affichés ou non) auxquels ils correspondent. Il résultera d'un tel affichage que l'utilisateur pourra composer sa nomenclature préférée, ou accéder immédiatement et directement à un service choisi, en connaissance de cause, et non plus en pratique en faisant défiler les images des différents services jusqu'à trouver celui qui l'intéresse.

L'invention a donc pour objet un décodeur de télévision comportant des circuits de réception de signaux d'un flux comportant des signaux vidéo et des signaux de signalisation relatifs à ces signaux vidéo, des circuits pour décoder ces signaux du flux reçu et pour produire des signaux vidéo et des signaux de triplets DVB, en vue d'afficher ces signaux vidéo sur un dispositif d'affichage, et des circuits de réglage du dispositif d'affichage en fonction des signaux de signalisation reçus et décodés, caractérisé en ce qu'il comporte une mémoire pour contenir des enregistrements d'éléments logiques correspondant à des numéros logiques, et ou à des noms de service et ou à des logos, et un circuit de correspondance pour faire correspondre des triplets DVB à des éléments logiques et pour afficher sur le dispositif d'affichage un élément logique pour désigner un triplet DVB.

L'invention a encore pour objet un procédé de décodage dans un décodeur de télévision comportant les étapes suivantes
- on reçoit dans des circuits de réception du décodeur des signaux de signalisation relatifs à des signaux vidéo,
- on décode dans le décodeur les signaux de signalisation reçus,
- on produit entre autres des signaux de triplets DVB,
- on affiche des signaux vidéo sur un dispositif d'affichage,
- on règle le dispositif d'affichage en fonction des signaux de signalisation reçus et décodés,
caractérisé en ce qu'il comporte les étapes suivantes
- on transmet au décodeur une mosaïque de logos, et ou une liste de noms, et ou une série de numéros sur un canal spécifique,
- on reçoit et on mémorise des logos, et ou des noms, et ou des numéros reçus,
- on fait correspondre des triplets DVB à des logos, et ou à des noms, et ou à des numéros mémorisés,
- et on affiche sur le dispositif d'affichage un logo, et ou un nom, et ou un numéro pour désigner un triplet DVB.

L'invention a enfin pour objet un procédé de décodage dans un décodeur de télévision comportant les étapes suivantes
- on reçoit dans des circuits de réception du décodeur de signaux de signalisation relatifs à des signaux vidéo,
- on décode dans le décodeur les signaux de signalisation reçus,
- on produit entre autres des signaux de triplets DVB,
- on affiche des signaux vidéo sur un dispositif d'affichage,
- on règle le dispositif d'affichage en fonction des signaux de signalisation reçus et décodés,
caractérisé en ce qu'il comporte les étapes suivantes
- on enregistre dans le décodeur une mosaïque de logos, et ou une liste de noms, et ou une série de numéros,
- on fait correspondre des triplets DVB à des logos, et ou des noms, et ou des numéros mémorisés,
- et on affiche sur le dispositif d'affichage un logo, et ou un nom, et ou un numéro pour désigner un triplet DVB.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : déjà commentée une présentation générale de la distribution des signaux d'un flux numérique de télédistribution;
- Figure 2 : une représentation schématique d'un décodeur selon l'invention.

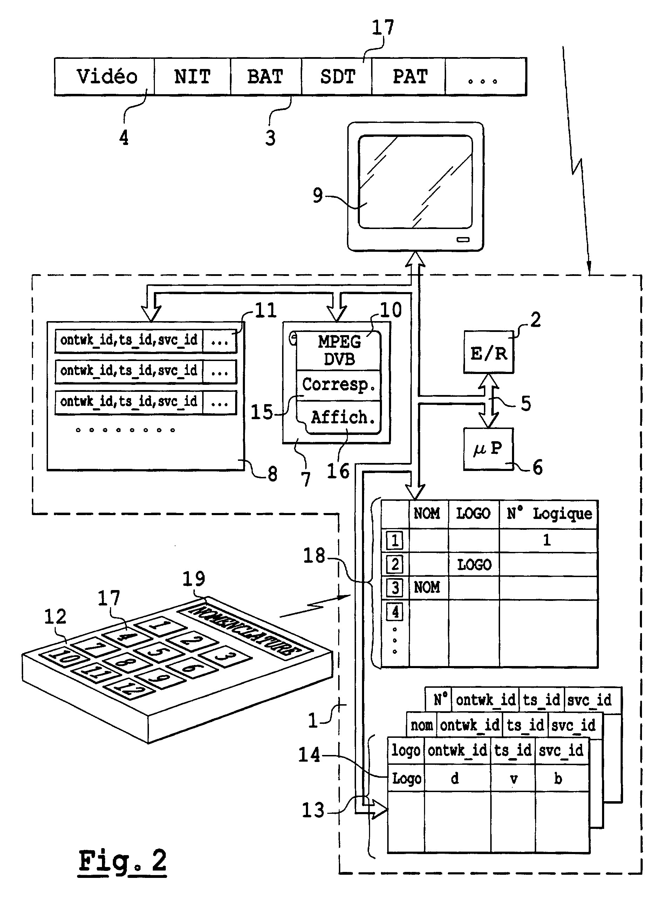

La figure 2 montre une représentation schématique d'un décodeur 1 selon l'invention. Ce décodeur 1 comporte des circuits 2 de réception pour recevoir les signaux d'un flux 3 transmis par l'un des médias selon la figure 1. Le flux 3 comporte des signaux vidéo 4 et des signaux de signalisation relatifs aux signaux vidéo. Les signaux de signalisation sont contenus dans des sections représentatives de tables NIT, BAT, SDT, EIT, TOT, TDT et PAT ou autres selon la norme précitée. Eventuellement les moyens de réception 2 sont des moyens d'émission réception dans le cas où avec le décodeur 1 l'utilisateur peut agir d'une manière interactive.

Les circuits de réception 2 sont reliés par un bus 5 à un microprocesseur 6, à une mémoire programme 7 et à une mémoire de données 8. Le bus 5 peut par ailleurs servir à relier un dispositif de visualisation 9 au décodeur 1. Le microprocesseur 6 en application d'un programme 10, intitulé ici symboliquement MPEG-DVB, et capable de produire les tables enregistrées dans la mémoire 8 à partir du flux 3 reçu. Des signaux de signalisation du flux 3, le microprocesseur 6 est ainsi capable d'extraire des triplets DVB, représentant pour chaque service les informations ontwk_id, ts_id, svc_id. A chaque triplet DVB ainsi décodé correspond par ailleurs dans les tables un ensemble 11 de paramètres de réglage. Schématiquement le principe du réglage du dispositif de visualisation 9 est le suivant. Un utilisateur visualise sur le dispositif 9 les triplets ontwk_id, ts_id et svc_id relatifs à chacun des services qu'il peut recevoir par le flux 3. Il sélectionne, en particulier avec une télécommande 12 et selon un protocole d'utilisation de télécommande connu, un de ces triplets affichés. Cette sélection, cette désignation, peut ensuite être suivie d'une visualisation directe du service correspondant à un triplet sélectionné. Dans ce cas le microprocesseur 6 prélève les paramètres 11 correspondant au triplet sélectionné, les applique en entrée de paramètre du dispositif d'affichage 9, et en paramètre de décodage des signaux vidéo reçus, et ce dispositif d'affichage est alors capable d'afficher les images et de diffuser les sons correspondant au service sélectionné.

La difficulté inhérente à ce système provient du caractère sibyllin des triplets ontwk_id, ts_id et svc_id affichés, et qui n'ont aucune signification immédiate pour l'utilisateur. Dans l'invention on prévoit de raccorder au bus 5, et donc de faire lire par le microprocesseur 6 une mémoire 13 que contient des enregistrements d'éléments logiques en correspondance de triplets DVB, ontwk_id, ts_id, svc_id. Par exemple un élément logique pourra être un logo, et dans un enregistrement 14 de la mémoire 13, à un logo LOGO correspondra un triplet DVB particulier dvb. Dans le cas où la mémoire 13 comporte des enregistrements tel que 14, la correspondance se réalisera par le fait que dans cette mémoire le triplet dvb possède la même adresse d'enregistrement que le logo LOGO auquel il correspond. Tout simplement ces deux informations correspondent à des champs différents dans ces enregistrements. Ou bien un programme de correspondance 15, mis en oeuvre par le microprocesseur 6 pourra prévoir que l'enregistrement LOGO se trouve dans la mémoire 13 à une adresse dont la valeur est égale justement à la valeur du triplet dvb auquel ce logo correspond.

Selon l'invention, la mémoire programme 7 comporte en outre un sous-programme d'affichage 16 pour afficher sur le dispositif d'affichage 9, en lieu et place du triplet dvb, ou juxtaposé à celui-ci, l'élément logique LOGO prélevé dans la mémoire 13 et qui correspond au triplet à sélectionner. Autrement dit l'utilisateur verra sur le dispositif d'affichage 9 l'élément logique LOGO auquel il peut plus facilement identifier le service, parce que celui-ci est connu commercialement sous cette identification. La sélection de l'élément logique ainsi identifié, par le sous-programme de correspondance 15 permet au microprocesseur 6 de sélectionner en pratique un triplet DVB auquel cet élément logique correspond. Par suite toutes les actions effectuées par l'utilisateur, visualisation directe ou constitution d'une nomenclature personnalisée, prendront en considération le triplet DVB ainsi sélectionné sans que l'utilisateur ait à en connaître la signification.

La mémoire 13 comportera éventuellement en lieu et place d'un logo un nom de service. Dans ce cas l'identification des différents services sur le dispositif d'affichage 9 se traduit par l'affichage d'une liste de chaînes, connues sous leurs noms commerciaux. Dans ce cas, un menu de sélection propose sur le dispositif d'affichage 9 la liste des noms. Il est toutefois possible de se dispenser de l'affichage d'un menu avec la liste des noms et de remplacer cet affichage par la composition, avec la télécommande 12, ou un clavier équivalent, des lettres du nom choisi suivies d'une action, celle qui correspond à ce que l'utilisateur compte en faire : visualisation immédiate ou incorporation à une nomenclature personnalisée.

Au lieu d'un logo, ou d'un nom commercial, l'identification d'un service peut se faire par une numérotation : l'élément logique étant alors un numéro. Cette numérotation peut s'effectuer de différentes manières. Cette numérotation est par ailleurs différente de l'information svc_id qui n'est pas à proprement parler un numéro. La norme DVB permet en effet l'utilisation de descripteur privé, à chaque service, à chaque triplet DVB, peut correspondre alors un numéro logique, prédéfini dans la signalisation par l'émetteur du flux. Ce numéro logique peut être incorporé à une table quelconque (par exemple SDT ou autre) correspondant au service diffusé.

Cette numérotation peut conduire néanmoins à une difficulté. En effet plusieurs services peuvent attribuer un même numéro (en particulier le numéro un parce qu'il correspondrait à la touche numéro un de la télécommande) à leur service. On peut procéder alors à une numérotation différente. Cette numérotation différente se réalise également dans le cas où les services n'ont pas associé de numéro privé dans le flux. Dans ce cas, on peut numéroter les services dans l'ordre d'arrivée des programmes dans le flux. Cette numérotation se réalise alors de 1 à N, quel que soit le type de service, les services pouvant être des services vidéo, audio (selon une langue, ou plusieurs langues) ou des services applicatifs, avec possibilité de réaction de la part de l'utilisateur. Cet ordre par défaut peut être celui tout simplement d'apparition des services dans chacune des tables NIT, BAT, SDT ou PAT selon la stratégie retenue pour la numérotation.

Autrement, on peut même prévoir de réaliser des tris, notamment par type de services, et de numéroter alors les services pour chacun des types de service avec des numéros croissants ou décroissants. Dans ce cas, cela peut se traduire par une liste de programmes de télévision numérotés de 1 à N, une liste de programmes radio de 1 à R, ainsi de suite. Dans ce cas particulier, on peut prévoir que le zapping, le changement d'un service à un autre, puisse se faire, en respectant avec des numéros 17 de la télécommande 12, l'ordre des numéros logiques. Par exemple la touche numérotée 1 de la télécommande 12 permettra d'accéder au programme dont le numéro logique est 1.

Il est toutefois possible, avec la simplification de l'invention de prévoir de réaliser, dans une mémoire 18, une ou plusieurs nomenclatures personnalisées faisant correspondre à des touches données de télécommande des services identifiés dans la mémoire 14. Par exemple comme vu ci-dessus, la touche de télécommande numéro un correspondra au service dont la numérotation logique, attribuée séquentiellement selon le procédé défini ci-dessus, sera le numéro un. De même la touche numéro deux pourra être attribuée au service dont le logo est LOGO. De même la touche numéro trois pourra être attribuée au service dont le nom est NOM. Avec la télécommande 12 l'utilisateur dispose alors d'une touche spéciale 19 de nomenclature (ou d'une combinaison de touches correspondantes), ou portant un autre nom, avec laquelle il peut constituer la nomenclature des programmes préférés. La particularité de l'invention se situe alors dans le fait que le microprocesseur 6 utilisera les triplets DVB pour identifier et sélectionner, selon la norme DVB, les programmes à visualiser, alors que l'utilisateur pourra effectuer ses choix en fonction d'informations beaucoup plus compréhensibles représentées par les noms, les logos ou les numéros logiques.

De préférence, plutôt qu'un seul élément logique on prévoira dans la mémoire 13 et/ou dans la mémoire 18 d'associer à un numéro DVB un triplet d'éléments logiques, chacun pouvant être alors sélectionné par son nom, son logo ou son numéro logique d'une manière univoque.

La manière de remplir la mémoire 13 et ou la mémoire 18 (par défaut pour cette dernière) peut consister à munir chaque décodeur de toutes les possibilités d'associer un triplet ontwk_id, ts_id, svc_id à un et ou aux autres des éléments logiques. Ainsi, si un service est distribué par plusieurs transpondeurs voire plusieurs réseaux, la mémoire 13 pourra comporter toutes les occurrences des triplets ontwk_id, ts_id et svc_id de ce service et, en correspondance de chacun d'eux, les mêmes éléments logiques à afficher. Si les éléments à afficher sont des logos, bien entendu le programme 16 comportera les instructions nécessaires pour afficher une image correspondant au logo.

On pourra néanmoins simplifier la programmation de la mémoire 13 (et ou de la mémoire 18) en choisissant de distribuer par un service spécifique, une liste de triplets ontwk_id, ts_id, et svc_id dont chacun d'eux est associé aux éléments logiques vu ci-dessus. Le programme de correspondance 15 pourra alors comporter le décodage de tous les triplets ontwk_id, ts_id, et svc_id reçus par le flux 3, la réception de ce service spécifique, et le prélèvement dans une mosaïque de logos reçue de ce service spécifique des logos, voire des enregistrements, correspondant aux triplets reçus par le flux, et leur mémorisation en mémoire 13 ou 18. Eventuellement, ce service spécifique peut être incorporé dans tous les flux, ou être accessible par un modem (non représenté et contenu dans le décodeur) dans un site Internet. En variante, la mémoire 13 n'est pas réalisée dans le décodeur, mais la mémoire 18 (associant des touche de la télécommande à des services choisis) peut être constituée au cours d'une réception d'une mosaïque reçue d'un canal spécifique. En variante encore, le contenu de la mémoire 13 peut être pré mémorisé dans le décodeur.

Plutôt que de mémoriser une seule nomenclature dans la mémoire 18, on peut prévoir de mémoriser des nomenclatures personnalisées et adaptées à chacun des téléspectateurs qui utilise le décodeur. Une première nomenclature peut ainsi être attribuée à un chef de famille et d'autres nomenclatures attribuées à chacun des enfants. Dans ce cas, la télécommande 12 comportera, avec la commande 19, la visualisation d'un menu préalable identifiant - chef de famille - enfants - celle de ces nomenclatures qui va être utilisée. Au besoin ces nomenclatures seront seulement numérotées, de 1 à M, s'il y en M possibles.

La composition d'une nomenclature comportera alors, la désignation de la nomenclature à composer (de préférence), puis des désignations de services (identifiés par leur logos, leurs noms et ou leurs numéros) et l'association à chaque service d'une touche (ou combinaison de touches) de la télécommande. La mémoire 18 est alors constituée. La lecture de la mémoire 18, en relation avec la mémoire 13, permet alors de sélectionner un service avec la télécommande 12.

## Revendications

1. Décodeur (1) de télévision comportant des circuits (2) de réception de signaux d'un flux (3) comportant des signaux vidéo (4) et des signaux de signalisation relatifs à des signaux vidéo, des circuits (6, 7) pour décoder ces signaux du flux reçu et pour produire des signaux vidéo et des signaux de triplets DVB, en vue d'afficher ces signaux vidéo sur un dispositif d'affichage (9), et des circuits (6) de réglage du dispositif d'affichage en fonction des signaux de signalisation reçus et décodés, caractérisé en ce qu'il comporte une mémoire (13) pour contenir des enregistrements (14) d'éléments logiques correspondant à des numéros logiques, et ou à des noms de service et ou à des logos, et un circuit (6, 15) de correspondance pour faire correspondre des triplets DVB à des éléments logiques et pour afficher (16) sur le dispositif d'affichage un élément logique pour désigner un triplet DVB.

2. Décodeur selon la revendication 1, caractérisé en ce qu'il comporte une mémoire pour enregistrer des triplets logiques en correspondance de triplets DVB.

3. Décodeur selon l'une des revendications 1 à 2, caractérisé en ce qu'il comporte des circuits pour attribuer un numéro logique à des triplets DVB en fonction de leur ordre d'apparition dans les signaux de signalisation, ou en fonction de l'ordre de leur décodage.

4. Décodeur selon l'une des revendications 1 à 2, caractérisé en ce qu'il comporte des circuits pour attribuer un numéro logique à des triplets DVB en fonction d'un tri de ces signaux de triplets DVB.

5. Procédé de décodage dans un décodeur (1) de télévision comportant les étapes suivantes
- on reçoit (2) dans des circuits de réception du décodeur de signaux de signalisation relatifs à des signaux vidéo,
- on décode (6,10) dans le décodeur les signaux de signalisation reçus,
- on produit entre autres des signaux (8) de triplets DVB,
- on affiche des signaux vidéo sur un dispositif (9) d'affichage,
- on règle (6) le dispositif d'affichage en fonction des signaux de signalisation reçus et décodés,
caractérisé en ce qu'il comporte les étapes suivantes
- on transmet au décodeur une mosaïque de logos, et ou une liste de noms, et ou une série de numéros sur un canal spécifique,
- on reçoit et on mémorise des logos, et ou des noms, et ou des numéros reçus,
- on fait correspondre des triplets DVB à des logos, et ou des noms, et ou des numéros mémorisés,
- et on affiche sur le dispositif d'affichage un logo, et ou un nom, et ou un numéro pour désigner un triplet DVB.

6. Procédé de décodage dans un décodeur (1) de télévision comportant les étapes suivantes
- on reçoit (2) dans des circuits de réception du décodeur de signaux de signalisation relatifs à des signaux vidéo,
- on décode (6, 10) dans le décodeur les signaux de signalisation reçus,
- on produit entre autres des signaux (8) de triplets DVB,
- on affiche des signaux vidéo sur un dispositif (9) d'affichage,
- on règle (6) le dispositif d'affichage en fonction des signaux de signalisation reçus et décodés,
caractérisé en ce qu'il comporte les étapes suivantes
- on enregistre dans le décodeur une mosaïque de logos, et ou une liste de noms, et ou une série de numéros,
- on fait correspondre des triplets DVB à des logos, et ou des noms, et ou des numéros mémorisés,
- et on affiche sur le dispositif d'affichage un logo, et ou un nom, et ou un numéro pour désigner un triplet DVB.

7. Procédé selon l'une des revendications 5 à 6, caractérisé en ce que
- on constitue un jeu de nomenclatures (18) associant chacune des commandes identifiées à des logos, et ou des noms, et ou des numéros mémorisés.
